# EUROPÄISCHE PATENTSCHRIFT

(11) **EP 1 880 118 B1**
(45) Veröffentlichungstag und Bekanntmachung des Hinweises auf die Patenterteilung: **12.01.2011**
(21) Anmeldenummer: 06753489.1
(22) Anmeldetag: 05.05.2006
(51) Int. Cl.: F16D 48/06

(54) **VERFAHREN ZUM BESTIMMEN DES ANLEGEPUNKTES EINER AUTOMATISCH BETÄTIGTEN REIBUNGSKUPPLUNG**
METHOD FOR DETERMINING THE APPLICATION POINT OF AN AUTOMATICALLY CONTROLLED FRICTION CLUTCH
PROCEDE POUR DETERMINER LE POINT D'APPLICATION D'UN EMBRAYAGE A FRICTION A COMMANDE AUTOMATIQUE

(30) Priorität: 11.05.2005 DE 102005021711
(43) Veröffentlichungstag der Anmeldung: 23.01.2008
(73) Patentinhaber: ZF Friedrichshafen AG, 88038 Friedrichshafen (DE)
(72) Erfinder: JAEGER, Thomas, 88074 Meckenbeuren (DE); MAIR, Roland, 88069 Tettnang-Laimnau (DE)
(86) Internationale Anmeldenummer: PCT/EP2006/004205
(87) Internationale Veröffentlichungsnummer: WO 2006/119918

(56) Entgegenhaltungen:
- EP-A- 0 550 993
- DE-C1- 19 951 527
- US-A- 5 176 234
- US-B1- 6 481 554

## Beschreibung

Die vorliegende Erfindung betrifft ein Verfahren zum Bestimmen des Anlegepunktes einer automatisch betätigten Reibungskupplung eines automatisierten Schaltgetriebes für ein Kraftfahrzeug gemäß dem Oberbegriff des Patentanspruches 1.

Die Bedeutung von automatisierten Schaltgetrieben wird in Zukunft zunehmen. Sie bieten gegenüber Handschaltgetrieben bei geringfügig höheren Kosten einen erheblichen Zuwachs an Fahrkomfort und Fahrsicherheit, da sie den Fahrer entlasten, haben jedoch gegenüber herkömmlichen Automatikgetrieben deutlich geringere Herstellungskosten und verursachen einen geringeren Kraftstoffverbrauch.

Wichtig für die Funktion von automatisierten Schaltgetrieben ist die automatische Steuerung der Kupplungsbetätigung und die dazu notwendige Kenntnis des Anlegepunktes der Kupplung bei allen Fahr- und Betriebsbedingungen, wie z.B. erhöhten Temperaturen, abgenutzten Kupplungsbelägen usw. Als Anlegepunkt wird diejenige Position der Kupplung bezeichnet, bei der gerade eine Übertragung eines Drehmomentes vom Motor auf die Getriebeeingangswelle beginnt.

Bei automatisierten Schaltgetrieben wählt der Fahrer oder eine Steuerungsvorrichtung zum Schalten des Getriebes den nächsten Gang vor, worauf die eigentlichen, im Oberbegriff des Anspruchs 1 beschriebenen Schaltvorgänge automatisch ablaufen. Um die gesamte Schaltzeit so kurz wie möglich zu halten, ist man bestrebt, die eine reine Totzeit darstellende Zeit für die Zustellung der Kupplung bis zum Anlegepunkt so kurz wie möglich zu halten, also diese Zustellung so schnell wie möglich durchzuführen. Die daran anschließende Bewegung der Kupplung in Schließrichtung läuft geregelt und in einer Weise ab, dass der Schaltvorgang bei einer Schaltdrehzahl der Getriebeeingangswelle durchgeführt werden kann.

Aus der EP 0 392 762 B1 ist bereits ein Verfahren zum Ermitteln des Anlagepunktes einer automatisch betätigten Reibungskupplung eines automatisierten Schaltgetriebes für ein Kraftfahrzeug bekannt, bei welchem die Leerlaufdrehzahl des Motors überwacht und zur Bestimmung des Anlegepunktes verwendet wird. Beim ersten Eingriff der Kupplung verlangsamt sich die Motordrehzahl infolge des Widerstandes durch das mitzuschleppende, leerlaufende Getriebe. Bei diesem signifikanten Abfall der Leerlaufdrehzahl des Motors bei Beginn des Kupplungseingriffes wird auf den Anlegepunkt geschlossen. Nachteilig ist, dass zum sicheren Erkennen des Anlegepunktes ein relativ großes Drehmoment auftreten muss. Dies führt am Motor regelmäßig zu einem Drehzahleinbruch, der als störend vom Fahrer wahrgenommen wird. Ein weiterer Nachteil des bekannten Verfahrens wird darin gesehen, dass dieses nur in Verbindung mit einem Getriebe einsetzbar ist, welches über eine herkömmliche Synchronisiereinrichtung verfügt, da eine Synchronisierung über eine Drehzahlsteuerung des Motors nicht erfolgt.

Aus der WO98/28162 A1 bzw. der EP 0 883 509 B1 ist bereits ein Verfahren bekannt, bei welchem ebenfalls die Motordrehzahl überwacht und zur Bestimmung des Anlegepunktes einer Kupplung verwendet wird. Dieses bekannte Verfahren nutzt einen Rückschaltvorgang. Dabei wird nach dem Öffnen der Kupplung und dem Ausrücken des höheren Ganges durch das Einrücken des niedrigeren Ganges die Getriebeeingangswelle des Getriebes auf eine höhere Drehzahl gebracht. Beim Schließen der Kupplung wird infolgedessen der Motor auf diese höhere Drehzahl beschleunigt. Bei dieser signifikanten Drehzahlerhöhung wird auf den Anlegepunkt geschlossen. Auch dieses Verfahren ist nur in Verbindung mit einem Getriebe mit herkömmlicher Synchronisiereinrichtung einsetzbar, da eine Synchronisierung durch eine aktive Drehzahlsteuerung des Motors nicht erfolgt.

Vor diesem Hintergrund liegt der Erfindung die Aufgabe zugrunde, ein Verfahren der im Oberbegriff des Anspruches 1 genannten Art zu schaffen, welches eine sichere und genaue Bestimmung des Anlegepunktes der Kupplung erlaubt und welches eine aktive Synchronisierung durch Steuerung der Motordrehzahl ermöglicht.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass bei einer aktiven Synchronisierung, bei der die Motordrehzahl auf einen Zielwert für den neuen Gang gebracht wird, beim Anlegen der Kupplung die Drehzahl der Eingangswelle des leerlaufenden bzw. auslaufenden Getriebes in signifikanter Weise geändert wird, und diese Drehzahländerung für eine sichere Bestimmung des Anlegepunktes geeignet ist.

Demnach geht die Erfindung aus von einem Verfahren zum Bestimmen eines Anlagepunktes einer automatisch betätigten Reibungskupplung eines automatisierten Schaltgetriebes für ein Kraftfahrzeug, wobei nach dem Vorwählen eines neuen Ganges die Kupplung getrennt, der eingelegte Gang ausgerückt, die Motordrehzahl auf einen Zielwert für den neuen Gang gebracht und die Kupplung bis zu einem Anlegepunkt zugestellt wird, bei dem die Getriebeeingangswelle gerade mitgenommen wird. Im weiteren Verlauf des Schaltvorganges wird in an sich bekannter Weise die Drehzahl der von der Kupplung angetriebenen Getriebeeingangswelle auf eine für das Einrücken des neuen Ganges erforderliche Schaltdrehzahl gebracht.

Zur Lösung der gestellten Aufgabe ist vorgesehen, dass der Gradient des zeitlichen Verlaufes der Drehzahl der Getriebeeingangswelle überwacht, eine bei Erreichen des Anlegepunktes sich einstellende signifikante Änderung des Gradienten ermittelt und die zu diesem Zeitpunkt bestehende Position der Kupplung als Anlegepunkt definiert wird.

Dieses Verfahren lässt sich grundsätzlich beim Hochschalten und beim Zurückschalten einsetzen, wobei jedoch beim Zurückschalten besonders günstige Bedingungen zur Bestimmung des Anlegepunktes vorliegen, wie anhand eines Ausführungsbeispieles näher erläutert wird.

Durch die DE 199 51 527 C1 ist zwar bereits ein Verfahren bekannt, bei welchem der Motor bei ausgerücktem Gang auf eine Zieldrehzahl für den nächsten Gang gebracht, die Kupplung eingerückt und die Drehzahl der Getriebeeingangswelle überwacht wird, um einen sogenannten Berührpunkt zu bestimmen. Bei diesem Berührpunkt handelt es sich jedoch nicht um den weiter vorne definierten Anlegepunkt der Kupplung. Als Berührpunkt wird vielmehr der Punkt bzw. die Kupplungsposition angesehen, bei der die Getriebeeingangswelle eine für das Einlegen des neuen Ganges erforderliche Schaltdrehzahl angenommen hat. Diese Kupplungsposition wird jedoch im Verlaufe des Schaltvorganges nach der Anlegeposition erreicht und ist deshalb als Anlegeposition, bis zu der eine schnelle Zustellung der Kupplung erfolgt, ungeeignet.

Wie bereits weiter vorne ausgeführt wurde, erfolgt gemäß einer bevorzugten Ausgestaltung der Erfindung die Bestimmung des Anlegepunktes bei einem Rückschaltvorgang, wobei der Anlegepunkt bei einem Gradientenwert G = 0 zwischen dem Auslaufen der Getriebeeingangswelle und dem Wiederbeschleunigen derselben auf eine höhere Schaltdrehzahl für den niedrigeren Gang definiert wird.

Bei einem Gradienten G = 0 hat die Drehzahl der Getriebeeingangswelle ein Minimum, d.h. der Gradient wechselt von einem negativen Wert auf einen positiven Wert; dieses ausgeprägte Drehzahlminimum kann sicher und einfach erkannt werden.

Gemäß einer anderen Ausgestaltung der Erfindung besteht jedoch auch die Möglichkeit, den Anlegepunkt bei einem Hochschaltvorgang zu bestimmen, da auch in diesem Fall im allgemeinen sich die Drehzahl der Getriebeeingangswelle beim Anlegen der Kupplung signifikant ändern wird, also der Drehzahlverlauf zumindest einen Knick aufweisen wird. Um sicherzustellen, dass auch in diesem Fall der Drehzahlverlauf ein sicher zu bestimmendes Minimum aufweist, ist vorgesehen, dass bei einem Hochschaltvorgang ein Auslaufen der Getriebeeingangswelle auf eine Drehzahl abgewartet wird, die unter der Schaltdrehzahl für den höheren Gang liegt, so dass auch hier beim Anlegen der Kupplung eine Drehzahlerhöhung erfolgt, d.h. eine Vorzeichenumkehr des Gradienten eintritt und damit eine sichere Bestimmung des Anlegepunktes möglich ist.

Damit die Bestimmung des Anlegepunktes nach den oben beschriebenen Verfahren auch unter Berücksichtigung von Signalverzögerungen, dem dynamischen Verhalten der Aktuatoren usw. ausreichend genaue Ergebnisse liefert, ist es sinnvoll, den Schließvorgang der Kupplung vergleichsweise langsam zu gestalten. Das führt dann allerdings dazu, dass die Schaltzeit durch die aktive Synchronisierung mittels Regelung der Motordrehzahl länger ist, als wenn getriebeeigene Synchronisiereinrichtungen verwendet werden. Es ist deshalb gemäß einer weiteren Ausgestaltung der Erfindung vorgesehen, dass die Bestimmung des Anlegepunktes jeweils bei Schaltvorgängen erfolgt, die eine lange Schaltzeit ohne einen merklichen Einfluss auf den Komfort erlauben, wie etwa bei Schubrückschaltvorgängen, Schaltvorgängen beim Ausrollen des Kraftfahrzeuges und dergleichen.

Des weiteren ist vorgesehen, dass das Zustellen der Kupplung aus der erreichten Anlegeposition in die endgültige Schließposition über eine Zeitspanne gestreckt wird, die die vorgegebenen Reaktionscharakteristika der am Schaltvorgang beteiligten Komponenten, d.h. die oben erwähnten Signalverzögerungen, das dynamische Verhalten der Aktuatoren usw. berücksichtigt.

Der Anlegepunkt der Kupplung kann im laufenden Fahrbetrieb immer wieder ermittelt und so den sich ändernden Verhältnissen nachgeführt werden. Insbesondere werden diese Verhältnisse von der Temperatur und dem aktuellen Belastungszustand beeinflusst. Neben diesen Einflüssen kann auch eine Kupplungsweg-Sensordrift zumindest teilweise kompensiert werden, wobei jeweils der tatsächliche Anlegepunkt bestimmt wird, unabhängig von dem dazu gehörenden Ausgangssignal eines Kupplungswegsensors.

Der Anlegepunkt kann in vorbestimmten Zeit- oder Schaltvorgangsabständen oder bei jedem der für eine Bestimmung desselben vorgesehenen Schaltvorgänge jeweils neu bestimmt und abgespeichert werden. Außerdem können unterschiedliche Anlegepunkte für unterschiedliche, in sich vergleichbare Schaltvorgänge bestimmt und abgespeichert werden.

Die Erfindung lässt sich anhand eines Ausführungsbeispiels weiter erläutern. Dazu ist der Beschreibung eine Zeichnung beigefügt.
In dieser zeigt
- Fig. 1: schematisch und rein qualitativ den zeitlichen Verlauf der Kupp- lungsposition bei einem Schaltvorgang,
- Fig. 2: den zeitlichen Verlauf der Gangposition, und
- Fig. 3: den zeitlichen Verlauf der Drehzahl der Getriebeeingangswelle.

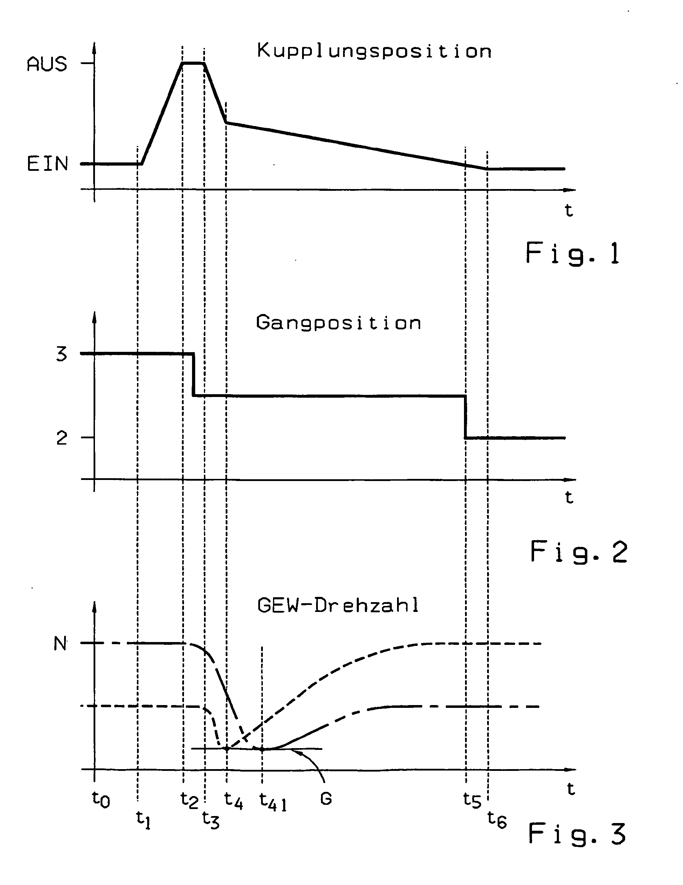

Die Figuren 1 bis 3 zeigen beispielhaft einen Rückschaltvorgang, bei welchem aus dem dritten Gang in den zweiten Gang zurückgeschaltet wird. Nachdem der Fahrer im Zeitpunkt t₀ einen Gangschalthebel aus einer Position für den dritten Gang in eine Position für den zweiten Gang verstellt und damit den zweiten Gang vorgewählt oder ein Steuergerät dies ausgelöst hat, beginnt zu einem Zeitpunkt t₁ das Öffnen der Kupplung aus der EIN-Position in die AUS-Position, die im Zeitpunkt t₂ erreicht wird. Gleichzeitig wird dem Fahrer die Steuerungsmöglichkeit der Motordrehzahl über das Gaspedal entzogen. Bei geöffneter Kupplung wird kein Drehmoment mehr übertragen. In der kurzen Zeitspanne zwischen t₂ und t₃, während der die Kupplung ganz geöffnet ist, wird der dritte Gang ausgerückt, so dass das Getriebe sich in einer Leerlaufposition befindet. Dazu rückt beispielsweise der Gangaktuator des Getriebes den Gang aus, und der Gassenaktuator des Getriebes steuert die zu dem Zielgang gehörende Getriebegasse an, falls diese nicht schon vorliegt.

Nach dem Ausrücken des dritten Ganges, d.h. etwa in der Zeitspanne zwischen t₃ und t₄ fällt die Drehzahl N der Getriebeeingangswelle infolge des inneren Schleppwiderstandes des Getriebes ab. In der gleichen Zeitspanne wird die Kupplung mit einer schnellen Zustellbewegung bis zum Anlegepunkt zugestellt, der im Zeitpunkt t₄ erreicht wird.

In der Zeitspanne zwischen t₄ und t₅ wird die Kupplung in einer geregelten Weise im allgemeinen mit einer geringeren Zustellgeschwindigkeit weiter zugestellt und die von der Kupplung mitgenommene Getriebeeingangswelle beschleunigt.

Zu einem vorgegebenen Zeitpunkt t₅ hat die Getriebeeingangswelle eine Schaltdrehzahl erreicht, bei welcher der zweite Gang über den Gangaktuator eingelegt werden kann. Da es sich um einen Rückschaltvorgang handelt, liegt diese Schaltdrehzahl im Zeitpunkt t₅ über der Drehzahl GEW-Drehzahl der Getriebeeingangswelle im Zeitpunkt t₀.

Zwischen den Zeitpunkten t₅ und t₆ wird die Kupplung in ihre endgültige geschlossene Position bewegt, die im Zeitpunkt t₆ erreicht wird. Zu diesem Zeitpunkt t₆ wird dem Fahrer das Steuern des Motordrehmomentes über das Gaspedal wieder ermöglicht.

Wie insbesondere die Fig. 3 erkennen lässt, hat der Drehzahlverlauf der Getriebeeingangswelle zum Zeitpunkt t₄, in welchem der Anlegepunkt erreicht wird, ein ausgeprägtes Minimum mit horizontaler Tangente (Gradient G = 0). Dieser Zeitpunkt t₄ kann in einfacher Weise sehr genau erfasst werden, womit auch die Bestimmung des Anlegepunktes sehr genau durchgeführt werden kann.

In Fig. 3 ist außerdem strichpunktiert ein möglicher Drehzahlverlauf der Getriebeeingangswelle für den Fall eingezeichnet, dass vom zweiten Gang in den dritten Gang hochgeschaltet wird. In diesem Fall lässt man das Getriebe so weit auslaufen, dass die Drehzahl der Getriebeeingangswelle unterhalb ihrer Zieldrehzahl für den dritten Gang liegt, so dass auch in diesem Fall wieder ein ausgeprägtes Minimum in einem Zeitpunkt t₄₁ entsteht, welches als Anlegepunkt definiert wird.

## Patentansprüche

1. Verfahren zum Bestimmen eines Anlegepunktes einer automatisch betätigten Reibungskupplung eines automatisierten Schaltgetriebes für ein Kraftfahrzeug, wobei nach dem Vorwählen eines neuen Ganges automatisch die Kupplung getrennt, der eingelegte Gang ausgerückt, die Motordrehzahl auf einen Zielwert für den neuen Gang gebracht und die Kupplung bis zu einem Anlegepunkt zugestellt wird, bei dem die Getriebeeingangswelle gerade mitgenommen wird, um die Drehzahl der Getriebeeingangswelle auf eine für das Einrücken des neuen Ganges erforderliche Schaltdrehzahl zu bringen, **dadurch gekennzeichnet, dass** der Gradient (G) des zeitlichen Verlaufes der Drehzahl der Getriebeeingangswelle überwacht, eine bei Erreichen des Anlegepunktes sich einstellende signifikante Änderung des Gradienten (G) ermittelt und die zu diesem Zeitpunkt (t₄, t₄₁) bestehende Position der Kupplung als Anlegepunkt definiert wird.

2. Verfahren nach Anspruch 1, **dadurch gekennzeichnet, dass** die Bestimmung des Anlegepunktes bei einem Rückschaltvorgang erfolgt, und dass der Anlegepunkt beim Gradienten G = 0 zwischen dem Auslaufen der Getriebeeingangswelle und dem Wiederbeschleunigen auf eine höhere Schaltdrehzahl für den niedrigeren Gang definiert wird.

3. Verfahren nach Anspruch 1, **dadurch gekennzeichnet, dass** die Bestimmung des Anlegepunktes bei einem Hochschaltvorgang erfolgt, wobei für die Zustellung der Kupplung bis zum Anlegepunkt ein Auslaufen der Getriebeeingangswelle auf eine Drehzahl abgewartet wird, die unter der Schaltdrehzahl für den höheren Gang liegt.

4. Verfahren nach Anspruch 1 oder 2, **dadurch gekennzeichnet, dass** die Bestimmung des Anlegepunktes bei Schaltvorgängen erfolgt, die eine vergleichsweise lange Schaltzeit erlauben, wie beispielsweise Schubrückschaltvorgänge und Schaltvorgängen beim Ausrollen des Kraftfahrzeuges.

5. Verfahren nach einem der Ansprüche 1 bis 4, **dadurch gekennzeichnet, dass** das Zustellen der Kupplung aus der Anlegeposition in die Schließposition über eine Zeitspanne gestreckt wird, welche die vorgegebenen Reaktionscharakteristika der am Schaltvorgang beteiligten Komponenten, wie etwa Signalverzögerungen, dynamisches Verhalten von Aktuatoren usw., berücksichtigt.

6. Verfahren nach einem der Ansprüche 1 bis 5, **dadurch gekennzeichnet, dass** der Anlegepunkt in vorbestimmten Zeit- oder Schaltvorgangsabständen oder bei jedem der für eine Bestimmung desselben vorgesehenen Schaltvorgänge neu bestimmt und gespeichert wird.

7. Verfahren nach einem der Ansprüche 1 bis 6, **dadurch gekennzeichnet, dass** unterschiedliche Anlegepunkte für unterschiedliche, in sich vergleichbare Schaltvorgänge bestimmt und gespeichert werden.

## Claims

1. Method for determining an application point of an automatically actuated friction clutch of an automatic shift transmission for a motor vehicle, wherein after the preselection of a new gear, the clutch is automatically opened, the engaged gear is disengaged, the engine rotational speed is adjusted to a target value for the new gear, and the clutch is closed until an application point is reached, at which the transmission input shaft is just driven along, in order to adjust the rotational speed of the transmission input shaft to a shift rotational speed required for the engagement of the new gear, **characterized in that** the gradient (G) of the time profile of the rotational speed of the transmission input shaft is monitored, a significant change in the gradient (G) brought about when the application point is reached is determined, and the position of the clutch at this time (t₄, t₄₁) is defined as the application point.

2. Method according to Claim 1, **characterized in that** the determination of the application point takes place during a downshift process, and **in that** the application point is defined at the gradient G = 0 between the rundown of the transmission input shaft and the reacceleration to a higher shift rotational speed for the lower gear.

3. Method according to Claim 1, **characterized in that** the determination of the application point takes place during an upshift process, with the closing of the clutch to the application point being delayed until the transmission input shaft has run down to a rotational speed which lies below the shift rotational speed for the higher gear.

4. Method according to Claim 1 or 2, **characterized in that** the determination of the application point takes place during shift processes which permit a comparatively long shift time, such as for example overrun downshift processes and upshift processes when the motor vehicle is coasting.

5. Method according to one of Claims 1 to 4, **characterized in that** the closing of the clutch from the application position into the closed position is stretched over a time period which takes into consideration the predefined reaction characteristics of the components involved in the shift process, such as for example signal delays, dynamic behaviour of actuators etc.

6. Method according to one of Claims 1 to 5, **characterized in that** the application point is newly determined and stored at predetermined time or shift intervals or during each of the shift processes provided for a determination thereof.

7. Method according to one of Claims 1 to 6, **characterized in that** different application points are determined and stored for different, comparable shift processes.

## Revendications

1. Procédé pour déterminer le point d'application d'un embrayage à friction à commande automatique, d'une boîte de vitesses automatisée pour un véhicule automobile, dans lequel, après la présélection d'une nouvelle vitesse, l'embrayage est automatiquement ouvert, la vitesse enclenchée est désenclenchée, le régime du moteur est amené à une valeur cible pour la nouvelle vitesse et l'embrayage est amené jusqu'à un point d'application auquel l'arbre d'entrée de boîte de vitesses est justement entraîné, afin d'amener le régime de l'arbre d'entrée de boîte de vitesses à un régime de changement de vitesse nécessaire pour l'enclenchement de la nouvelle vitesse, **caractérisé en ce que** le gradient (G) de l'allure dans le temps du régime de l'arbre d'entrée de boîte de vitesses est contrôlé, une variation notable du gradient (G) s'établissant une fois que le point d'application est atteint étant déterminée et la position de l'embrayage existant à cet instant (t₄, t₄₁) étant définie comme le point d'application.

2. Procédé selon la revendication 1, **caractérisé en ce que** la détermination du point d'application a lieu dans une opération de rétrogradage, et **en ce que** le point d'application est défini pour un gradient G = 0 entre la sortie de l'arbre d'entrée de boîte de vitesses et la ré-accélération à un régime de changement de vitesse supérieur pour la vitesse inférieure.

3. Procédé selon la revendication 1, **caractérisé en ce que** la détermination du point d'application a lieu dans une opération de passage à une vitesse supérieure, dans laquelle on attend, pour amener l'embrayage jusqu'au point d'application, une sortie de l'arbre d'entrée de boîte de vitesses jusqu'à un régime qui se situe en dessous du régime de changement de vitesse pour la vitesse supérieure.

4. Procédé selon la revendication 1 ou 2, **caractérisé en ce que** la détermination du point d'application a lieu dans des opérations de changement de vitesse qui autorisent un temps de changement de vitesse relativement long, comme par exemple des opérations de changement de rétrogradage en mode de frein moteur, et des opérations de changement de vitesse lors de la marche en roue libre du véhicule automobile.

5. Procédé selon l'une quelconque des revendications 1 à 4, **caractérisé en ce que** l'opération consistant à amener l'embrayage hors de la position d'application dans la position de fermeture s'étend sur un intervalle de temps qui tient compte des caractéristiques de réaction prédéfinies des composants participant à l'opération de changement de vitesse, comme par exemple des retards de signaux, un comportement dynamique des actionneurs, etc..

6. Procédé selon l'une quelconque des revendications 1 à 5, **caractérisé en ce que** le point d'application est redéterminé et mémorisé pendant les intervalles de temps ou d'opérations de changement de vitesse prédéterminés ou pour chacune des opérations de changement de vitesse prévues pour une détermination de ce point d'application.

7. Procédé selon l'une quelconque des revendications 1 à 6, **caractérisé en ce que** différents points d'application pour différentes opérations de changement de vitesse comparables en soi sont déterminés et mémorisés.
